(19)

**Europäisches Patentamt**

**European Patent Office**

**Office européen des brevets**

(11)  **EP 3 267 164 A1**

(12) **EUROPEAN PATENT APPLICATION**
published in accordance with Art. 153(4) EPC

(43) Date of publication:
**10.01.2018  Bulletin 2018/02**

(51) Int Cl.:
***G01G 19/387*** (2006.01)     ***G01G 13/04*** (2006.01)

(21) Application number: **16761680.4**

(22) Date of filing: **04.03.2016**

(86) International application number:
**PCT/JP2016/056863**

(87) International publication number:
**WO 2016/143710 (15.09.2016 Gazette 2016/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.03.2015  JP 2015045119**

(71) Applicant: **Ishida Co., Ltd.**
**Kyoto-shi, Kyoto 606-8392 (JP)**

(72) Inventor: **IWASA, Seisaku**
**Ritto-shi**
**Shiga 520-3026 (JP)**

(74) Representative: **Gill Jennings & Every LLP**
**The Broadgate Tower**
**20 Primrose Street**
**London EC2A 2ES (GB)**

(54)  **MIX WEIGHING DEVICE**

(57)     Provided is a mix weighing device which facilitates a constant mixing ratio, in terms of external appearance, of a plurality of types of materials after mix weighing. This mix weighing device (1) is a device to mix-weigh a plurality of types of the material on the basis of individual weighed target weight (Wt), wherein the mix weighing device (1) is provided with a conveying unit (10), a mix weighing unit (20), a storage unit (61), a weighed target weight setting unit (66), and a control unit (60). The conveying unit (10) conveys the material. The mix weighing unit (20) weighs and discharges the material. The storage unit (61) stores the apparent specific gravity and a mix volume proportion (Pv) of each type of material. The weighed target weight setting unit (66) sets individual weighed target weight (Wt) for each type of the material on the basis of the apparent specific gravity and the mix volume proportion (Pv). The control unit (60) controls the conveying unit (10) and the mix weighing unit (20) on the basis of the individual weighed target weight (Wt).

F I G . 5

**EP 3 267 164 A1**

**Description**

**TECHNICAL FIELD**

The present invention relates to a mix weighing device.

**BACKGROUND ART**

Conventionally, there have been known mix weighing devices configured so as to mix-weigh a supplied plurality of types of materials on the basis of a target weight. For example, a mix weighing device disclosed in patent literature 1 (Japanese Laid-open Patent Publication No. H 9-133573) is configured so as to mix-weigh a plurality of candies of different types on the basis of the target weight (target number) set for each type and discharge the mix-weighed candies to a bag-making packaging machine. In patent literature 1, the target weight (target number) for each type is suitably changed at a prescribed timing during operation of the device. This equalizes the total number of discharged material by each type and suppresses the possibility that a specific type of material will remain as inventory, even in cases where the inventory amounts are different according to type.

**SUMMARY OF THE INVENTION**

<Technical Problem>

In the mix weighing device such as is described above, an apparent specific gravity of the supplied material could fluctuate according to the situation. For example, such fluctuation could occur when the specific gravity of sprinkle material and/or a coating material sprinkled on the material is greater than the specific gravity of the material.
However, in the mix weighing device in the prior art such as patent literature 1, it is conceivable that the mixing ratio, in terms of external appearance, of a plurality of types of materials after mix weighing could be different from the intended mixing ratio when such fluctuation occurs.
Thus, the problem of the present invention is to provide a mix weighing device which facilitates a constant mixing ratio, in terms of external appearance, of a plurality of types of materials after mix weighing.

<Solution to Problem>

A mix weighing device according to a first aspect of the present invention is a mix weighing device to mix-weigh a plurality of types of materials on the basis of individual weighed target weight, wherein the mix weighing device is provided with a conveying unit, a weighing unit, a storage unit, a setting unit, and a control unit. The conveying unit conveys the material. The weighing unit weighs and discharges the material conveyed from the conveying unit. The storage unit stores the apparent specific gravity of each type of the material and a mix volume proportion of each type of the material in mix weighing. The term "storage" includes temporary storage and/or permanent storage. The term "apparent specific gravity" means the mass of the material per unit volume, and is also referred to as "bulk specific gravity." The setting unit sets individual weighed target weight for each type of the material on the basis of the apparent specific gravity and the mix volume proportion. The term "mix volume proportion" means the proportion of the volumes of the each type of the materials after mix weighing. The control unit controls the conveying unit and the weighing unit on the basis of the individual weighed target weight set by the setting unit.
In the mix weighing device according to the first aspect of the present invention, the setting unit sets individual weighed target weight for each type of the material on the basis of the apparent specific gravity and the mix volume proportion, and the control unit controls the conveying unit and the weighing unit on the basis of the set individual weighed target weight. A state is thereby achieved in which, after mix weighing, the plurality of types of the material are mixed at the mix volume proportion irrespective of whether the apparent specific gravity of the supplied material fluctuates. This results in facilitation of a constant mixing ratio, in terms of external appearance, of the material after mix weighing.
A mix weighing device according to a second aspect of the present invention is the mix weighing device according to the first aspect, wherein the storage unit further stores a post-mix-weighing total target weight. The setting unit sets the individual weighed target weight by type of the material further on the basis of the total target weight.
The individual weighed target weight are thereby set on the basis of the total target weight. Specifically, the individual weighed target weight can be set such that the total weight of the material after mix weighing conforms to or approximates the total target weight. As a result, the total weight after mix weighing is stabilized.
A mix weighing device according to a third aspect of the present invention is the mix weighing device according to the first aspect or second aspect, wherein the mix weighing device is further provided with an apparent specific gravity measurement unit. The apparent specific gravity measurement unit is disposed upstream from the weighing unit. The apparent specific gravity measurement unit measures the apparent specific gravity of each type of the material.

This facilitates measurement of the apparent specific gravity of the supplied material in real time during operation. As a result, the individual weighed target weight can be quickly changed in response to fluctuations in the apparent specific gravity of the supplied material.

A mix weighing device according to a fourth aspect of the present invention is the mix weighing device according to any one of the first to third aspects, wherein the setting unit configured and arranged to set newly the individual weighed target weight on the basis of the updated apparent specific gravity when the apparent specific gravity stored in the storage unit is updated during operation.

The individual weighed target weight are thereby set in real time on the basis of the updated apparent specific gravity during operation. This results in highly precise facilitation of a constant mixing ratio, in terms of external appearance, of the material after mix weighing even when variation in the apparent specific gravity of the supplied material is notable.

A mix weighing device according to a fifth aspect of the present invention is the mix weighing device according to the fourth aspect, wherein the setting unit sets newly the individual weighed target weight on the basis of the updated apparent specific gravity only when the apparent specific gravity of a specific type of the material is updated.

This makes it possible to newly set the individual weighed target weight exclusively for a specific type of the material of which the apparent specific gravity readily fluctuates. As a result, the individual weighed target weight is efficiently changed within a required minimum range. Specifically, the individual weighed target weight relating to a material of which the apparent specific gravity does not readily fluctuate may not be updated. As a result, processing speed is increased because no process to calculate this individual weighed target weight is performed.

<Advantageous Effects of Invention>

In the mix weighing device according to the present invention, a state is achieved in which, after mix weighing, a plurality of types of the materials are mixed at a mix volume proportion irrespective of fluctuation of the apparent specific gravity of the supplied material. This results in facilitation of a constant mixing ratio, in terms of external appearance, of the material after mix weighing.

**BRIEF DESCRIPTION OF THE DRAWINGS**

FIG. 1 is a schematic configuration of a mix weighing device according to one embodiment of the present invention;
FIG. 2 is a schematic configuration of a mix weighing unit;
FIG. 3 is a schematic configuration of an apparent specific gravity measurement unit;
FIG. 4 is a block diagram schematically showing a control unit and units connected to the control unit;
FIG. 5 is a flow chart showing one example of the flow of processes in the control unit;
FIG. 6 is a schematic drawing showing one example of a result when mix-weighing is performed by a conventional mix weighing device;
FIG. 7 is a schematic drawing showing one example of a result when mix-weighing is performed by the mix weighing device according to the one embodiment of the present invention; and
FIG. 8 is a schematic diagram of a mix weighing device according to a modification A.

**DESCRIPTION OF EMBODIMENTS**

A mix weighing device 1 according to one embodiment of the present invention is described below with reference to the drawings. The embodiment described below is a specific example of the present invention, and does not in any way limit the technical scope of the present invention; modifications can be made, as appropriate, without departing from the gist of the invention.

(1) Overall Configuration

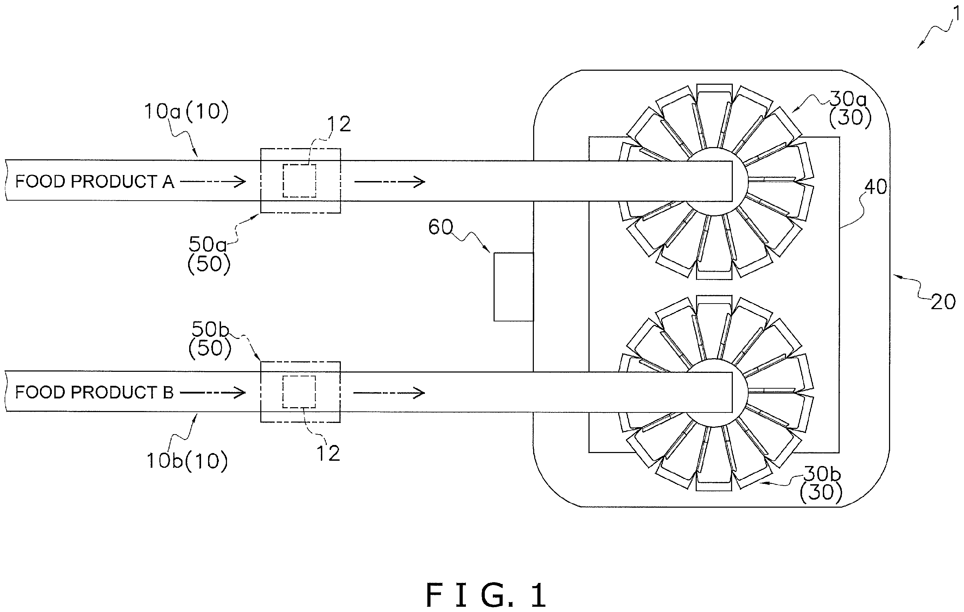

FIG. 1 is a schematic configuration of a mix weighing device 1 according to one embodiment of the present invention. In FIG. 1, two-dot chain-line arrows indicate a movement direction of a material (food product).

The mix weighing device 1 is a device to mix-weigh a supplied plurality of types of the material on the basis of individual weighed target weight Wt. There is no particular limitation as to the material mix-weighed by the mix weighing device 1; in the present embodiment, an example is described in which the mix weighing device 1 mix-weighs a plurality of types of the material (a food product A and a food product B). Specifically, in this example, the food product A is a material of which the apparent specific gravity (G1) undergoes little fluctuation, and the food product B is a material of which the apparent specific gravity (G2) fluctuates frequently according to the situation. For example, the food product A may be popcorn, and the food product B may be popcorn that is coated with chocolate (a coating material). The term "apparent specific gravity" means the mass of the material per unit volume, and is also referred to as "bulk specific gravity."

The mix weighing device 1 primarily has a conveying unit 10, a mix weighing unit 20, an apparent specific gravity measurement unit 50, and a control unit 60.

(2) Detailed Configuration

(2-1) Conveying Unit 10

The conveying unit 10 is a unit to convey supplied material to the mix weighing unit 20. The conveying unit 10 has a number (in the present example, two) of conveying lines equal to the number of types of supplied materials (food products). The conveying lines are, e.g., belt conveyors and/or vibrating conveyors. In the present embodiment, the conveying unit 10 includes a first conveying line 10a and a second conveying line 10b. In the present embodiment, the food product A is supplied to the first conveying line 10a, and the food product B is supplied to the second conveying line 10b.

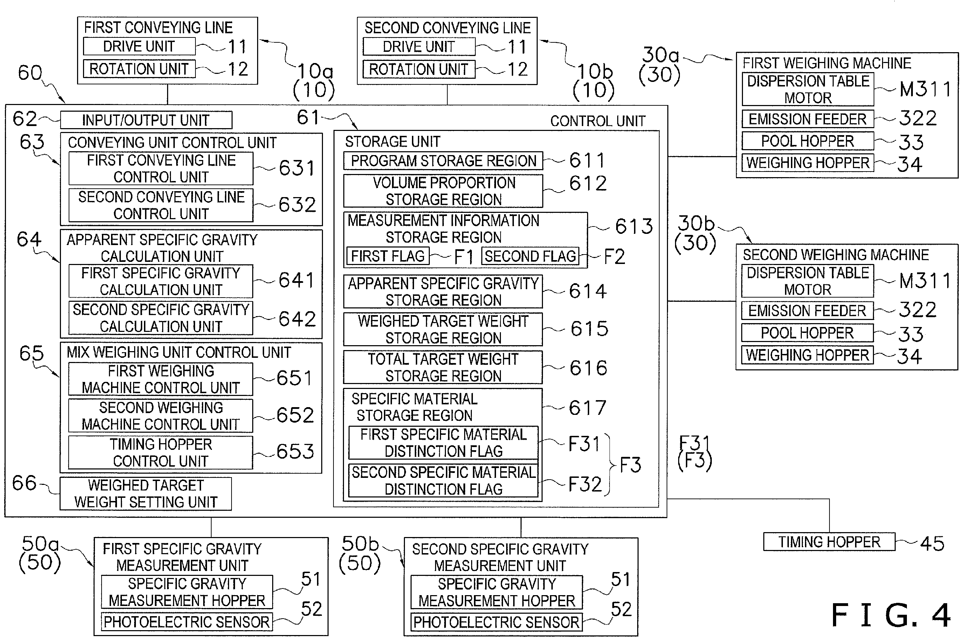

Each of the conveying lines has a drive unit 11 (see FIG. 4) to drive the conveying line at a speed that corresponds to a control signal outputted from the control unit 60. When the drive unit 11 is in a drive state, the material on each of the conveying lines is sent toward the mix weighing unit 20.

Each of the conveying lines also has a rotation unit 12. The rotation unit 12 includes a stepping motor for rotation, the stepping motor rotating clockwise or counterclockwise due to output of a control signal from the control unit 60.

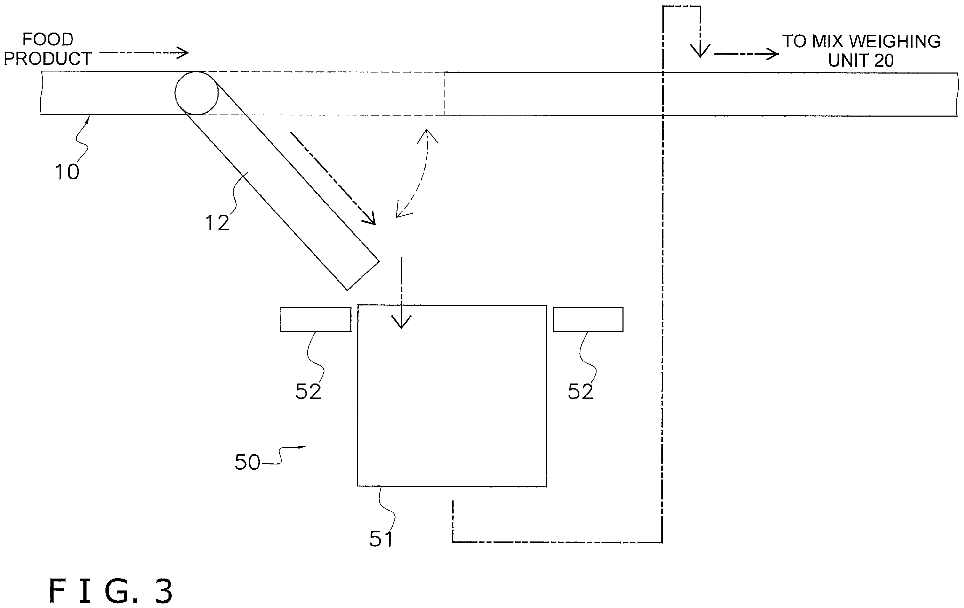

When the stepping motor for rotation rotates clockwise, the rotation unit 12 rotates downward at a prescribed angle (see dotted-line arrows in FIG. 3). A state in which the rotation unit 12 has rotated downward to a prescribed angle from a horizontal surface is referred to below as an "open state" of the rotation unit 12. When the rotation unit 12 is in the "open state," the material that has been sent to the rotation unit 12 is dropped downward and sent to a specific gravity measurement hopper 51 (described later).

When the stepping motor for rotation rotates counterclockwise, the rotation unit 12 rotates upward at a prescribed angle (see dotted-line arrows in FIG. 3). A state in which the rotation unit 12 has rotated upward to a prescribed angle from the open state is referred to below as a "closed state" of the rotation unit 12. When the rotation unit 12 is in the "closed state," the rotation unit 12 is approximately parallel to the horizontal surface, and the material that is sent to the rotation unit 12 is sent downstream from the conveying line without being dropped downward.

(2-2) Mix weighing unit 20

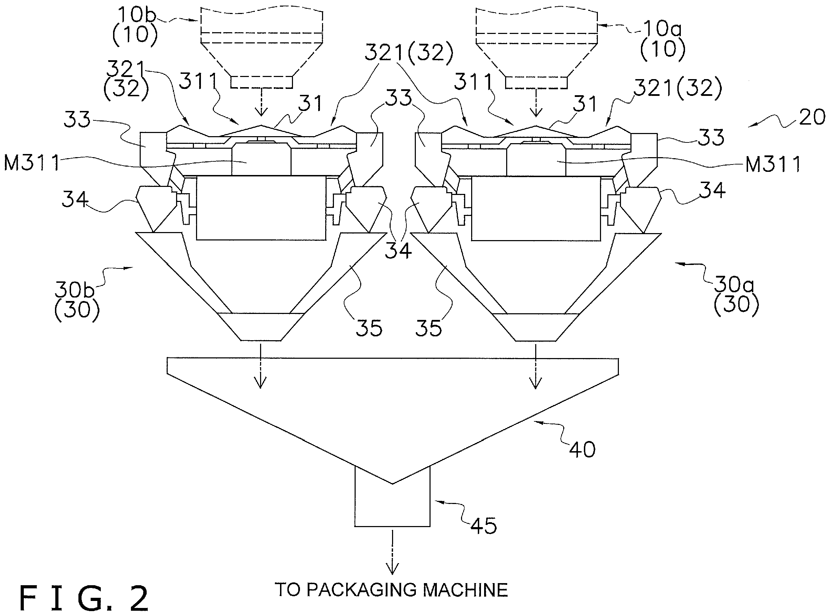

FIG. 2 is a schematic configuration of the mix weighing unit 20. In FIG. 2, two-dot chain-line arrows indicate the movement direction of the material (food product).

The mix weighing unit 20 is a unit to mix-weigh the food product A and the food product B, which have been sent from the conveying unit 10, and to discharge the food product A and the food product B which have been mix-weighed. The mix weighing unit 20 includes a number (in the present example, two) of weighing machines 30 (specifically, a first weighing machine 30a and a second weighing machine 30b) equal to the number of conveying lines, and also includes an integration chute 40 and a timing hopper 45.

(2-2-1) Weighing Machines 30

The weighing machines 30 are mechanisms configured to weigh the material sent from a prescribed conveying line, and in the present embodiment are combination weighing machines. Specifically, the material (food product A) from the first conveying line 10a is sent to the first weighing machine 30a. The material (food product B) from the second conveying line 10b is sent to the second weighing machine 30b.

The weighing machines 30 primarily have a dispersion unit 31, an emission unit 32, a plurality of pool hoppers 33, a number of weighing hoppers 34 equal to the number of pool hoppers 33, and a gathering chute 35.

The dispersion unit 31 includes a dispersion table 311 that is circular in a plan view, and a dispersion table motor M311 of which an output shaft is connected to the dispersion table 311. The dispersion table motor M311 is driven according to a control signal outputted from the control unit 60. When the dispersion table motor M311 is in a drive state, the dispersion table 311 rotates.

The emission unit 32 is a unit to convey the material (food product), which is sent from the dispersion table 311, to the pool hoppers 33. A plurality of emission units 32 are disposed so as to extend radially around the dispersion table 311. The emission unit 32 primarily has an emission trough 321, and an emission feeder 322 disposed within the emission trough 321 (not shown). Each of the emission trough 321 receives material sent from the dispersion table 311. The emission feeder 322 includes an electromagnet and/or a leaf spring, and causes the emission trough 321 to vibrate. The material within the emission troughs 321 is thereby sent to the pool hoppers 33.

The pool hoppers 33 temporarily retain the material that has been conveyed from the emission unit 32. In the pool hoppers 33, an opening/closing gate (not shown) provided to the lower part of each of the pool hoppers 33 is opened at a prescribed timing, thereby sending the retained material to the weighing hoppers 34.

One weighing hopper 34 is provided below each of the pool hoppers 33. Each of the weighing hoppers 34 has a hopper weight measurement part (not shown) such as a load cell or the like. The hopper weight measurement part measures the weight of the material sent from the pool hoppers 33 to the weighing hoppers 34. The result of measuring by the hopper weight measurement part is transmitted to the control unit 60. An opening/closing gate (not shown) is provided to the lower part of each of the weighing hoppers 34, the opening/closing gate being opened/closed according to a control signal outputted from the control unit 60. When the opening/closing gate is in an open state, the material within the weighing hopper 34 is discharged to the gathering chute 35.

The gathering chute 35 gathers the material sent from the weighing hoppers 34 and discharges the gathered material to outside of the mix weighing unit 20. The material discharged from the gathering chute 35 is sent to the integration chute 40 disposed below the gathering chute 35.

(2-2-2) Integration Chute 40 and Timing Hopper 45

The integration chute 40 gathers and discharges the material (food product) sent from the weighing machines 30 (weighing hoppers 34). The material discharged from the integration chute 40 is sent to the timing hopper 45 disposed below the integration chute 40.

The material (food product A and food product B) discharged from the weighing machines 30 and sent to the timing hopper 45 via the integration chute 40 enters a mixed state within the timing hopper 45. An opening/closing gate (not shown) is provided to the lower part of the timing hopper 45, the opening/closing gate being opened/closed according to a control signal outputted from the control unit 60. When the opening/closing gate is in an open state, the material within the timing hopper 45 is discharged. The mixed material discharged from the timing hopper 45 is supplied to a process downstream from the mix weighing unit 20. For example, the material discharged from the timing hopper 45 may be supplied to a packaging machine or the like. (not shown).

(2-3) Apparent Specific Gravity Measurement Unit 50

FIG. 3 is a schematic configuration of the apparent specific gravity measurement unit 50. In FIG. 3, two-dot chain-line arrows indicate the movement direction of the material (food product), and dotted-line arrows indicate a rotation direction of the rotation unit 12.

The apparent specific gravity measurement unit 50 is a unit for measuring the apparent specific gravity of the material (food product) flowing along the conveying line of the conveying unit 10. The apparent specific gravity measurement unit 50 is disposed below the rotation units 12 of each of the conveying lines (the first conveying line 10a and the second conveying line 10b) of the conveying unit 10. Specifically, it can also be said that apparent specific gravity measurement units 50 are disposed upstream of the mix weighing units 20.

The apparent specific gravity measurement unit 50 primarily has a specific gravity measurement hopper 51 and a photoelectric sensor 52.

The specific gravity measurement hopper 51 temporarily accommodates the material that has dropped from the rotation unit 12, and measures the weight of the material. The specific gravity measurement hopper 51 has such a capacity as to be capable of accommodating a prescribed amount of the material. In the present embodiment, the specific gravity measurement hopper 51 is capable of accommodating 1000 cc of the material. A weight measurement sensor (not shown) such as a load cell or the like is disposed in the specific gravity measurement hopper 51. The specific gravity measurement hopper 51 measures the weight of the material therein according to input of a control signal (referred to as a "measurement start signal" below) outputted from the control unit 60, and outputs a signal (referred to as a "measured value notification signal" below) that corresponds to a measured value to the control unit 60.

An opening/closing gate (not shown) is provided to the lower part of the specific gravity measurement hopper 51, and the specific gravity measurement hopper 51 opens/closes the opening/closing gate according to a control signal outputted from the control unit 60. When the opening/closing gate is in an open state, the material within the specific gravity measurement hopper 51 is discharged. The material discharged from the specific gravity measurement hopper 51 is sent to a recovery conveyor (not shown), and then is re-supplied to the conveying line to which the material had been supplied. More specifically, the material discharged from the specific gravity measurement hopper 51 is supplied to a location downstream from the rotation unit 12 in the conveying line.

The apparent specific gravity measurement unit 50 has a specific gravity measurement hopper 51, and a photoelectric sensor 52 for detecting whether the amount of the material present within the specific gravity measurement hopper 51 has reached a prescribed first threshold value $\Delta Th1$. In the present embodiment, the first threshold value $\Delta Th1$ is set to 800 cc. When the amount of the material present within the specific gravity measurement hopper 51 has reached the prescribed first threshold value $\Delta Th1$, the photoelectric sensor 52 outputs a signal (referred to as a "measurement preparation complete signal" below) in response to the control unit 60.

(2-4) Control Unit 60

The control unit 60 is a functional unit to generally control the operations of the mix weighing device 1. The control unit 60 has a microcomputer including a CPU, a memory and/or the like. In the present embodiment, the control unit 60 is disposed in the mix weighing unit 20. The control unit 60 is electrically connected to actuators and/or sensors included in the mix weighing device 1. Details about the control unit 60 are described later under "(4) Details about Control Unit 60."

(3) Operations of Mix Weighing Device 1

When running, the mix weighing device 1 operates in a process flow such as is generally described below.
When a prescribed material (food product) is supplied in a state in which the conveying lines (10a, 10b) of the conveying unit 10 are being driven, the supplied material is sent downstream and reaches the rotation unit 12.
When the rotation unit 12 is in a closed state, the material that has reached the rotation unit 12 passes through the rotation unit 12 and is sent to the mix weighing unit 20.
When the rotation unit 12 is in an open state, the material that has reached the rotation unit 12 drops downward and is accommodated by the specific gravity measurement hopper 51 of the apparent specific gravity measurement unit 50. After the weight of the material accommodated by the specific gravity measurement hopper 51 is measured at a prescribed timing, the material is discharged from the specific gravity measurement hopper 51 and recovered to the conveying line by the recovery conveyor. The material recovered to the conveying line is sent to the mix weighing unit 20.
The material sent to the mix weighing unit 20 is sent to the corresponding weighing machines 30.
After the material sent to the weighing machines 30 is dispersed in a peripheral direction due to rotation of the dispersion table 311, the material is discharged to the emission unit 32. The material discharged to the emission unit 32 is sent to the pool hoppers 33 due to vibration of the emission unit 32. After the material sent to the pool hoppers 33 is temporarily retained in the pool hoppers 33, the material is sent to the weighing hoppers 34 and is weighed.
Next, a combination calculation is carried out using the measured values in the plurality of weighing hoppers 34, and a combination of weighing hoppers 34 is suitably selected so that the total weight conforms to the individual weighed target weight Wt or approximates the same within a permissible weight range. The material within the selected weighing hoppers 34 is discharged from the weighing hoppers 34 and is discharged from the weighing machines 30 via the gathering chute 35.
The material discharged from the weighing machines 30 is sent to the timing hopper 45 via the integration chute 40. After the material sent to the timing hopper 45 is mixed within the timing hopper 45 with material discharged from another weighing machine 30, the material is discharged from the timing hopper 45 at a prescribed timing.
The material discharged from the timing hopper 45 is sent to a packaging machine or other downstream process.

(4) Details about Control Unit 60

FIG. 4 is a block diagram schematically showing the control unit 60 and units connected to the control unit 60.
The control unit 60 is electrically connected to the first conveying line 10a, the second conveying line 10b, the first weighing machine 30a, the second weighing machine 30b, the timing hopper 45, a first specific gravity measurement unit 50a, and a second specific gravity measurement unit 50b, as shown in FIG. 4.
The control unit 60 primarily has a storage unit 61, an input/output unit 62, a conveying unit control unit 63, an apparent specific gravity calculation unit 64, a mix weighing control unit 65, and a weighed target weight setting unit 66.

(4-1) Storage unit 61

The storage unit 61 includes, e.g., a RAM and/or a ROM, and a flash memory or other type of memory, and temporarily or permanently stores various information. The storage unit 61 primarily includes a program storage region 611, a volume proportion storage region 612, a measurement information storage region 613, an apparent specific gravity storage region 614, a weighed target weight storage region 615, a total target weight storage region 616, and a specific material storage region 617.
In the program storage region 611, there is stored a control program in which processes of the various units within the control unit 60 are defined. The control program is suitably updated.

In the volume proportion storage region 612, there is stored a mix volume proportion Pv set by a user via an input device (not shown). The mix volume proportion Pv is the proportion of the volumes of the each type of the materials after mix weighing. In the present embodiment, the mix volume proportion Pv is the proportion of the volume of the food product A with respect to the volume of the food product B after mix weighing. For example, when the volume of the food product A is 500 mL and the volume of the food product B is 500 mL after mix weighing, the mix volume proportion Pv is 1:1. When the volume of the food product A is 750 mL and the volume of the food product B is 250 mL after mix weighing, the mix volume proportion Pv is 3:1.

In the measurement information storage region 613, there is stored a measured value notification signal outputted from the apparent specific gravity measurement unit 50. The measurement information storage region 613 includes a first flag F1 and a second flag F2 that have prescribed bit numbers.

The first flag F1 and the second flag F2 are individually set by the input/output unit 62 according to the output of a measurement preparation complete signal from the apparent specific gravity measurement unit 50. When calculation of the apparent specific gravity by the apparent specific gravity measurement unit 50 is complete, the first flag F1 and the second flag F2 are individually cleared by the apparent specific gravity measurement unit 50.

In the apparent specific gravity storage region 614, there is stored the apparent specific gravity of each type of the material as calculated by the apparent specific gravity calculation unit 64. In the present embodiment, the apparent specific gravity of each of the food product A and the food product B is individually stored in the apparent specific gravity storage region 614.

In the weighed target weight storage region 615, there are stored the individual weighed target weight Wt for each type of the material as set by the weighed target weight setting unit 66. The individual weighed target weight Wt are target values for the weight of each type of the material in one mix weighing cycle. In the present embodiment, a first weighed target weight Wt1 that is the individual weighed target weight Wt for the food product A and a second weighed target weight Wt2 that is the individual weighed target weight Wt for the food product B are separately stored in the weighed target weight storage region 615.

In the total target weight storage region 616, there is stored a total target weight set by the user via an input unit (not shown). The total target weight is a target value for the total weight of the mixture of the material after mix weighing. In the present embodiment, the total target weight is suitably set according to the product use or the like.

The specific material storage region 617 includes a specific material distinction flag F3 that has a prescribed bit number. The specific material distinction flag F3 is a flag to distinguish a material (referred to as a "specific material" below) for which the individual weighed target weight Wt needs to be updated after operation of the device, and also to distinguish the apparent specific gravity measurement unit (50a or 50b) to which supplied the specific material.

The specific material is a material of which the apparent specific gravity readily fluctuates, and of which the mixing ratio, in terms of external appearance, after mix weighing could become unstable if the individual weighed target weight Wt is not appropriately updated, the material being designated by the use's decision. For example, a material on which a coating material and/or sprinkle material is sprinkled may be designated as the specific material.

The specific material storage region 617 includes a number of specific material distinction flags F3 equal to the number of apparent specific gravity measurement units 50. In the present embodiment, the specific material storage region 617 includes a first specific material distinction flag F31 that corresponds to the first specific gravity measurement unit 50a (i.e., the food product A), and a second specific material distinction flag F32 that corresponds to the second conveying line 10b (i.e., the food product B).

Each of the specific material distinction flags F3 is individually set by the user via an input device (not shown). Specifically, a specific material distinction flag F3 is set that corresponds to the apparent specific gravity measurement unit 50 to which the specific material is supplied. In the present embodiment, the food product B supplied to the second specific gravity measurement unit 50b is designated as a specific material, and the second specific material distinction flag F32 is set in response thereto. Specifically, the food product B is stored as a specific material in the specific material storage region 617. However, the food product A supplied to the first specific gravity measurement unit 50a is not designated as a specific material, and therefore the first specific material distinction flag F31 is not set. Specifically, the food product A is not stored as a specific material in the specific material storage region 617.

Individually setting each of the specific material distinction flags F3 in this manner makes it possible for another processing unit to distinguish whether the material supplied to each of the apparent specific gravity measurement units 50 is designated as a specific material or not. In the present embodiment, the specific material distinction flag F3 is suitably referred to by the apparent specific gravity calculation unit 64.

(4-2) Input/output Unit 62

The input/output unit 62 is a functional unit to fulfill the role of an interface for exchanging signals with other units. When the input/output unit 62 receives a signal outputted from another unit, the input/output unit 62 stores the signal in a prescribed storage region within the storage unit 61 according to the type of signal. The input/output unit 62 also outputs prescribed signals to other units according to requests from units within the control unit 60.

When the input/output unit 62 receives a measured value notification signal outputted from the apparent specific gravity measurement unit 50, the input/output unit 62 stores information pertaining to the signal in the measurement information storage region 613.

When the input/output unit 62 receives a measurement preparation complete signal outputted from (the photoelectric sensor 52 of) the first specific gravity measurement unit 50a, the input/output unit 62 sets the first flag F1. When the input/output unit 62 receives a measurement preparation complete signal outputted from (the photoelectric sensor 52 of) the second specific gravity measurement unit 50b, the input/output unit 62 sets the second flag F2.

(4-3) Conveying Unit Control Unit 63

The conveying unit control unit 63 is a functional unit to control the operations of the conveying unit 10.

The conveying unit control unit 63 controls the drive unit 11 of each of the conveying lines on the basis of the individual weighed target weight Wt for the supplied materials (food products). More specifically, the conveying unit control unit 63 controls the drive unit 11 such that the material (food product) is sent to the mix weighing unit 20 at a speed that corresponds to the individual weighed target weight Wt.

The conveying unit control unit 63 causes the rotation unit 12 of the conveying line to change from the closed state to the open state, or from the open state to the closed state, upon receiving a request from the apparent specific gravity calculation unit 64.

The conveying unit control unit 63 includes a number of control units that corresponds to the number of conveying lines. In the present embodiment, the conveying unit control unit 63 includes a first conveying line control unit 631 and a second conveying line control unit 632. The first conveying line control unit 631 controls the operations of the first conveying line 10a. The second conveying line control unit 632 controls the operations of the second conveying line 10b.

(4-4) Apparent Specific Gravity Calculation Unit 64

The apparent specific gravity calculation unit 64 is a functional unit to calculate the apparent specific gravity of each type of the material. The apparent specific gravity calculation unit 64 includes a number of calculation units that corresponds to the number of apparent specific gravity measurement units 50. In the present embodiment, the apparent specific gravity calculation unit 64 includes a first specific gravity calculation unit 641 and a second specific gravity calculation unit 642.

Each of the calculation units (641 and 642) executes an apparent specific gravity calculation process. The apparent specific gravity calculation process is to calculate the apparent specific gravity of the material (food product) supplied to the corresponding apparent specific gravity measurement unit 50.

When the material to be supplied to the corresponding apparent specific gravity measurement unit 50 is not designated as a specific material, the calculation units (641 and 642) execute the apparent specific gravity calculation process only during initial startup of the device. When the material to be supplied to the corresponding apparent specific gravity measurement unit 50 is designated as a specific material, the calculation units (641 and 642) execute the apparent specific gravity calculation process each time a prescribed time period t1 elapses after the initial startup of the device. In the present embodiment, the prescribed time period t1 is set to 30 seconds.

Each of the calculation units (641 and 642) refers to the specific material distinction flags F3 (F31 and F32) of the specific material storage region 617 during startup, and determines whether the material to be supplied to the corresponding apparent specific gravity measurement unit 50 (50a or 50b) is designated as a specific material or not.

(4-4-1) First Specific Gravity Calculation Unit 641

The first specific gravity calculation unit 641 executes the apparent specific gravity calculation process in the manner described below.

The first specific gravity calculation unit 641 issues a request, at a prescribed timing, to the conveying unit control unit 63 to change the rotation unit 12 of the first conveying line 10a from the closed state to the open state.

When the first flag F1 is set, the first specific gravity calculation unit 641 issues a request to change the rotation unit 12 of the first conveying line 10a from the open state to the closed state, and outputs a measurement start signal to the first specific gravity measurement unit 50a. The first specific gravity calculation unit 641 then clears the first flag F1.

When a measured value notification signal outputted from the first specific gravity measurement unit 50a is newly stored in the measurement information storage region 613, the first specific gravity calculation unit 641 acquires and decodes this signal, and extracts a measured value Vw1 of the first specific gravity measurement unit 50a. After extracting the measured value Vw1, the first specific gravity calculation unit 641 calculates the apparent specific gravity G1 of the food product A on the basis of the following mathematical formula

$$G1 = Vw1/C1 \quad (Fa)$$

G1: Apparent specific gravity (g/cc) of food product A
Vw1: Measured value (g) of first specific gravity measurement unit 50a
C1: First threshold value $\Delta$Th1 (cc)

In the present embodiment, C1 = first threshold value $\Delta$Th1 = 800 (cc); therefore, when the measured value Vw1 is 80 (g), the apparent specific gravity G1 of the food product A is calculated to be 0.1 (g/cc).
The first specific gravity calculation unit 641 stores the calculated apparent specific gravity G1 of the food product A in the apparent specific gravity storage region 614.

(4-4-2) Second Specific Gravity Calculation Unit 642

The second specific gravity calculation unit 642 executes the apparent specific gravity calculation process in the manner described below.
The second specific gravity calculation unit 642 issues a request, at a prescribed timing, to the conveying unit control unit 63 to change the rotation unit 12 of the second conveying line 10b from the closed state to the open state.
When the second flag F2 is set, the second specific gravity calculation unit 642 issues a request to change the rotation unit 12 of the second conveying line 10b from the open state to the closed state, and outputs a measurement start signal to the second specific gravity measurement unit 50b. The second specific gravity calculation unit 642 then clears the second flag F2.
When a measured value notification signal outputted from the second specific gravity measurement unit 50b is newly stored in the measurement information storage region 613, the second specific gravity calculation unit 642 acquires and decodes this signal, and extracts a measured value Vw2 of the second specific gravity measurement unit 50b. After extracting the measured value Vw2, the second specific gravity calculation unit 642 calculates the apparent specific gravity G2 of the food product B on the basis of the following mathematical formula Fb:

$$G2 = Vw2/C2 \quad (Fb)$$

G2: Apparent specific gravity (g/cc) of food product B
Vw2: Measured value (g) of second specific gravity measurement unit 50b
C2: First threshold value $\Delta$Th1 (cc)

In the present embodiment, C2 = first threshold value $\Delta$Th1 = 800 (cc); therefore, when the measured value Vw2 is 160 (g), the apparent specific gravity G2 of the food product B is calculated to be 0.2 (g/cc).
The second specific gravity calculation unit 642 stores the calculated apparent specific gravity G2 of the food product B in the apparent specific gravity storage region 614.

(4-5) Mix Weighing Unit Control Unit 65

The mix weighing unit control unit 65 is a functional unit to control the operations of the mix weighing unit 20. More specifically, the mix weighing unit control unit 65 individually controls the operation of the dispersion table motor M311, the emission feeder 322, the pool hoppers 33, and the weighing hoppers 34. The mix weighing unit control unit 65 includes a number of control units that corresponds to the number of weighing machines 30 in the mix weighing unit 20. Specifically, the mix weighing unit control unit 65 includes a first weighing machine control unit 651 to control the operations of the first weighing machine 30a, and a second weighing machine control unit 652 to control the operations of the second weighing machine 30b. The mix weighing unit control unit 65 also includes a timing hopper control unit 653 to control the operations of the timing hopper 45.
The mix weighing unit control unit 65 also includes a plurality of flags that have prescribed bit numbers. Specifically, the mix weighing unit control unit 65 includes a first weighing complete distinction flag, a second weighing complete distinction flag, and a timing hopper open flag (not shown).
In the present embodiment, setting the first weighing complete distinction flag makes it possible to distinguish whether the weighed material from the first weighing machine 30a is in a state of being discharged to the gathering chute 35. Setting the second weighing complete distinction flag makes it possible to distinguish whether the weighed material from the second weighing machine 30b is in a state of being discharged to the gathering chute 35. Setting the timing hopper open flag makes it possible to distinguish whether the timing hopper 45 is in the open state.

After startup, the first weighing machine control unit 651 acquires, from the weighed target weight storage region 615, the individual weighed target weight Wt (i.e., the first weighed target weight Wt1) for the material (food product A) sent from the first conveying line 10a each time a prescribed time period t2 elapses. The first weighing machine control unit 651 individually controls the dispersion table motor M311, the emission feeder 322, the pool hoppers 33, and the weighing hoppers 34 such that material (food product A) at the individual weighed target weight Wt is discharged from the first weighing machine 30a to the gathering chute 35. The first weighing machine control unit 651 performs the control such that the material is discharged from the first weighing machine 30a only when the timing hopper open flag is not set. The first weighing machine control unit 651 sets a first weighing complete flag (not shown) each time material equivalent to the individual weighed target weight Wt is discharged from the first weighing machine 30a.

After startup, the second weighing machine control unit 652 acquires, from the weighed target weight storage region 615, the individual weighed target weight Wt (i.e., the second weighed target weight Wt2) for the material (food product B) sent from the second conveying line 10b each time the prescribed time period t2 elapses. The second weighing machine control unit 652 individually controls the dispersion table motor M311, the emission feeder 322, the pool hoppers 33, and the weighing hoppers 34 such that material (food product B) equivalent to the individual weighed target weight Wt is discharged from the second weighing machine 30b to the gathering chute 35. The second weighing machine control unit 652 performs the control such that the material is discharged from the second weighing machine 30b only when the timing hopper open flag is not set. The second weighing machine control unit 652 sets a second weighing complete flag (not shown) each time material equivalent to the individual weighed target weight Wt is discharged from the second weighing machine 30b.

In the present embodiment, the prescribed time period t2 is set to 30 seconds.

The timing hopper control unit 653 opens/closes the timing hopper 45 at a prescribed timing. When the first weighing complete flag and the second weighing complete flag are both set, the timing hopper control unit 653 opens the timing hopper 45 after the timing hopper open flag is set. After a prescribed time period has elapsed from when the timing hopper 45 was opened, the timing hopper control unit 653 closes the timing hopper 45 and clears the timing hopper open flag.

(4-6) Weighed Target Weight Setting Unit 66

The weighed target weight setting unit 66 is a functional unit to set the individual weighed target weight Wt by type of the material.

When the apparent specific gravity of the material is stored in the apparent specific gravity storage region 614, the weighed target weight setting unit 66 newly sets the corresponding individual weighed target weight Wt. Specifically, when the apparent specific gravity G1 of the food product A or the apparent specific gravity G2 of the food product B is stored in the apparent specific gravity storage region 614, the weighed target weight setting unit 66 executes a weighed target weight setting process.

In the weighed target weight setting process, the weighed target weight setting unit 66 calculates each of the individual weighed target weight Wt (in the present embodiment, the first weighed target weight Wt1 and the second weighed target weight Wt2) for each type of the material on the basis of the total target weight, the apparent specific gravity of the materials, and the mix volume proportion Pv. The weighed target weight setting unit 66 stores the calculated individual weighed target weight Wt in the weighed target weight storage region 615.

Specifically, in the weighed target weight setting process, the weighed target weight setting unit 66 acquires the mix volume proportion Pv from the volume proportion storage region 612, acquires the apparent specific gravity of each type of the material from the apparent specific gravity storage region 614, and acquires the total target weight from the total target weight storage region 616.

Next, the weighed target weight setting unit 66 calculates each of the individual target volumes Vt of each type of the material on the basis of the acquired values. The individual target volumes Vt are the target volumes for each type of the material after mix weighing.

For example, when the mix volume proportion Pv is set to 1:2, the proportion of a first target volume Vt1 of the food product A and a second target volume Vt2 of the food product B is 1:2, the first target volume Vt1 of the food product A and the second target volume Vt2 of the food product B being as follows:

$$Vt2 = 2 \times Vt1$$

Vt1: Individual target volume Vt (cc) of food product A
Vt2: Individual target volume Vt (cc) of food product B

The weighed target weight setting unit 66 then calculates the individual weighed target weight Wt for each type of the material on the basis of the calculated individual target volumes Vt, the apparent specific gravity of each type of the material, and the total target weight.

For example, where the total target weight is set to 100 (g), the apparent specific gravity G1 of the food product A is calculated as 0.1 (g/cc), and the apparent specific gravity G2 of the food product B is calculated as 0.2 (g/cc), the first weighed target weight Wt1 and the second weighed target weight Wt2 are calculated after the individual target volumes Vt of each type of the material is calculated, as follows:

$$Wt1 = G1 \times Vt1 = 0.1 \times Vt1 \ (g)$$

$$Wt2 = G2 \times Vt2 = 0.2 \times 2 \times Vt1 = 0.4 \times Vt1 \ (g)$$

Because total target weight is 100 (g),

$$100 \ (g) = Wt1 + Wt2 = 0.1 \times Vt1 + 0.4 \times Vt1 = 0.5 \times Vt1$$

Therefore,

Vt1 = 200 (cc)
Vt2 = 400 (cc)
Wt1 = 20 (g)
Wt2 = 80 (g)

When the apparent specific gravity of the materials fluctuates after calculation of the individual weighed target weight Wt for each type of the material, the individual weighed target weight Wt for each type of the material are calculated again on the basis of the individual target volumes Vt, the apparent specific gravity of each type of the material, and the total target weight.

For example, when the apparent specific gravity G2 of the food product B designated as a specific material in the example described above fluctuates to 0.15 (g/cc), the first target volume Vt1, the second target volume Vt2, the first weighed target weight Wt1, and the second weighed target weight Wt2 are calculated as follows:

$$Wt1 = G1 \times Vt1 = 0.1 \times Vt1 \ (g)$$

$$Wt2 = G2 \times Vt2 = 0.15 \times 2 \times Vt1 = 0.3 \times Vt1 \ (g)$$

Because total target weight is 100 (g),

$$100 \ (g) = Wt1 + Wt2 = 0.1 \times Vt1 + 0.3 \times Vt1 = 0.4 \times Vt1$$

Therefore,

Vt1 = 250 (cc)
Vt2 = 500 (cc)
Wt1 = 25 (g)
Wt2 = 75 (g)

For another example, in a case where the food product A is designated as a specific material, when the apparent specific gravity G1 of the food product A fluctuates to 0.2 (g/cc) and the apparent specific gravity G2 of the food product B fluctuates to 0.3 (g/cc), the first target volume Vt1, the second target volume Vt2, the first weighed target weight Wt1, and the second weighed target weight Wt2 are calculated as follows:

$$Wt1 = G1 \times Vt1 = 0.2 \times Vt1 \; (g)$$

$$Wt2 = G2 \times Vt2 = 0.3 \times 2 \times Vt1 = 0.6 \times Vt1 \; (g)$$

Because total target weight is 100 (g),

$$100 \; (g) = Wt1 + Wt2 = 0.2 \times Vt1 + 0.6 \times Vt1 = 0.8 \times Vt1$$

Therefore,

Vt1 = 125 (cc)
Vt2 = 250 (cc)
Wt1 = 25 (g)
Wt2 = 75 (g)

Thus, in the weighed target weight setting process, the weighed target weight setting unit 66 calculates each of the individual target volumes Vt for each type of the material on the basis of the total target weight, the apparent specific gravity of each type of the material, and the mix volume proportion Pv, and calculates the individual weighed target weight Wt for each type of the material on the basis of the calculated individual target volumes Vt and the apparent specific gravity of each type of the material. That is, it can also be said that the individual weighed target weight Wt are calculated on the basis of the total target weight, the apparent specific gravity of each type of the material, and the mix volume proportion Pv. Specifically, the weighed target weight setting unit 66 sets the individual weighed target weight Wt for each type of the material on the basis of the total target weight such that the total weight of the mix-weighed material conforms to or approximates the total target weight.

In the weighed target weight setting process, there are cases where the individual weighed target weight Wt is not calculated to an integer. In such cases, the weighed target weight setting unit 66 calculates the individual weighed target weight Wt by rounding up, rounding down, or rounding to the nearest whole number. When the sum of the individual weighed target weight Wt needs to conform to the total target weight, a configuration may be adopted such that, after one of the individual weighed target weight Wt is calculated, the weighed target weight setting unit 66 calculates a value obtained by subtracting the calculated individual weighed target weight Wt from the total target weight as the other of the individual weighed target weight Wt.

(5) Flow of Processes of Control Unit 60

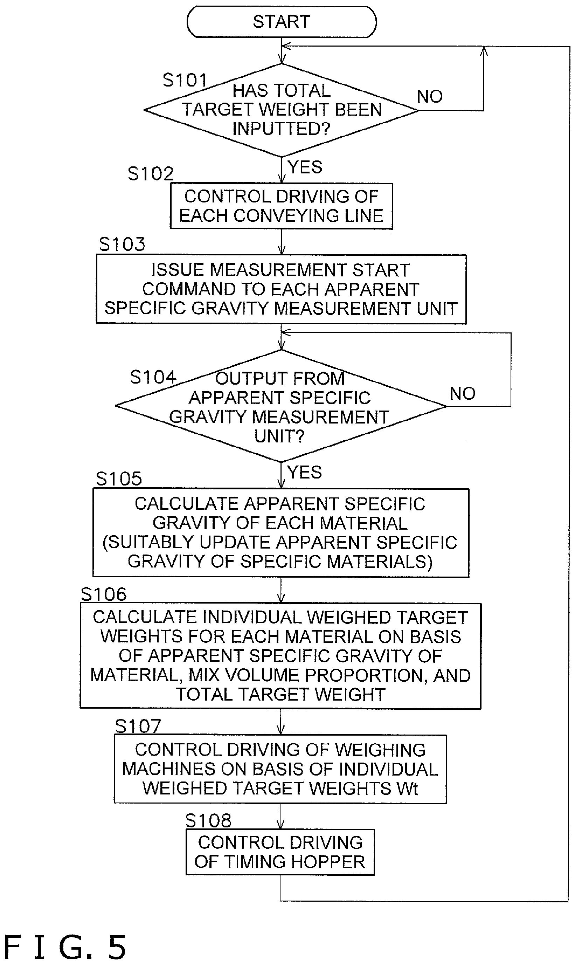

FIG. 5 is a flow chart showing one example of the flow of processes in the control unit 60.

When electric power is supplied and an operation start command is inputted by a user, the control unit 60 executes a flow of processes such as is described below.

In step S101, the control unit 60 determines whether a total target weight has been inputted (i.e., whether a total target weight is stored in the storage unit 61). When the result of determination is NO (i.e., when no total target weight has been inputted), the control unit 60 repeats the determination while the operations of the other units are in a stopped state. When the result of determination is YES (i.e., when a total target weight has been inputted), the flow proceeds to step S102.

In step S102, the control unit 60 drives each of the conveying lines (10a and 10b) of the conveying unit 10 at a prescribed operation speed. The flow then proceeds to step S103.

In step S103, the control unit 60 sends a control signal (measurement start signal) to the apparent specific gravity measurement unit 50 at a prescribed timing and causes the apparent specific gravity measurement unit 50 to measure the weight of each type of the material supplied by each of the conveying lines. The flow then proceeds to step S104.

In step S104, the control unit 60 determines whether a measured value (i.e., a measured value notification signal) has been outputted from the apparent specific gravity measurement unit 50 to which the measurement start signal was transmitted. When the result of determination is NO (i.e., when no measured value has been outputted), the determination in step S104 is repeated. When the result of determination is YES (i.e., when a measured value has been outputted), this result is stored in the storage unit 61, and the flow proceeds to step S105.

In step S105, the control unit 60 calculates the apparent specific gravity of each type of the material. For materials other than specific materials, the apparent specific gravity is calculated only during startup. For specific materials, the apparent specific gravity is suitably calculated and updated not only during startup but also during operation. The control unit 60 stores the calculated apparent specific gravity in the storage unit 61. The flow then proceeds to step S106.

In step S106, the control unit 60 calculates individual weighed target weight Wt for each type of the material on the basis of the apparent specific gravity of the materials, the mix volume proportion Pv, and the total target weight. The control unit 60 stores the calculated individual weighed target weight Wt in the storage unit 61. The flow then proceeds to step S107.

In step S107, the control unit 60 controls driving of the weighing machines 30 on the basis of the individual weighed target weight Wt. The flow then proceeds to step S108.

In step S108, the control unit 60 opens/closes the timing hopper 45 at a prescribed timing (specifically, after it has been confirmed that material at the individual weighed target weight Wt is discharged from the weighing machines 30). The flow then returns to step S101.

(6) Function of Mix Weighing Device 1

In devices configured to mix-weigh, the apparent specific gravity of a supplied material could fluctuate according to the situation, depending on the type of material. In particular, in cases of the supply of a material on which sprinkle material and/or a coating material is sprinkled, such as the food product B that is coated with chocolate, the quantity of the coating material readily varies in a step for sprinkling the sprinkle material and/or coating material, and such fluctuation readily occurs. For example, such fluctuation could occur when the specific gravity of sprinkle material and/or a coating material is greater than the specific gravity of the material prior to the application of the sprinkle material and/or coating material.

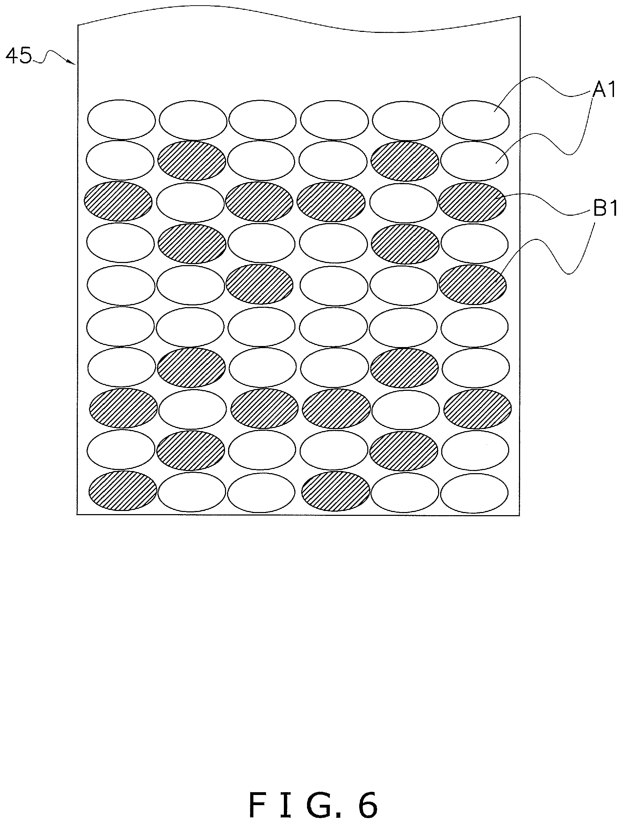

When such fluctuation occurs, the mixing ratio, in terms of external appearance, of a plurality of types of the material after mix weighing could be different from the intended mixing ratio. Specifically, when a material B1 that the apparent specific gravity readily fluctuates and a material A1 are mix-weighed in a situation in which the mix volume proportion Pv is set to 1:1, if mix-weighing is performed without any consideration for fluctuation in the apparent specific gravity, in the manner of conventional mix weighing devices, the mix volume proportion after mix weighing will not necessarily be 1:1, and the mixing ratio, in terms of external appearance, of the material A1 and the material B1 could fail to be constant. For example, when the apparent specific gravity of the material A1 fluctuates so as to double, the mix volume proportion of the material A1 and the material B1 becomes 2:1, as shown in FIG. 6.

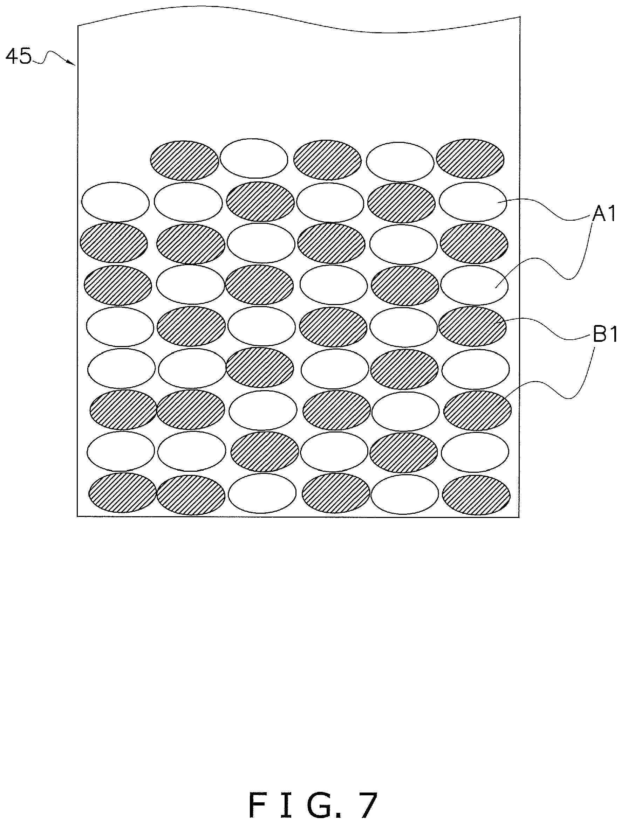

However, in the mix weighing device 1, such fluctuation is suppressed, thus facilitating a constant mixing ratio, in terms of external appearance, of a plurality of types of the material after mix weighing. Specifically, the mix weighing device 1 is configured such that the individual weighed target weight Wt for each type of the material are set in real time on the basis of the apparent specific gravity and the mix volume proportion Pv. Each type of the material is thereby mixed at the designated mix volume proportion Pv after mix weighing, irrespective of whether the apparent specific gravity of the supplied material changes. As a result, even in the example described previously, the mix volume proportion of the material A1 and the material B1 after mix weighing constantly remains the set mix volume proportion Pv (i.e., 1:1), as shown in FIG. 7. Accordingly, the mix weighing device 1 facilitates a constant mixing ratio, in terms of external appearance, of the plurality of types of the material after mix weighing.

Additionally, the weighed target weight setting unit 66 sets the individual weighed target weight Wt by type of the material on the basis of the total target weight stored in the storage unit 61. The total weight of the materials after mix weighing thereby conforms to or approximates the total target weight and is stabilized.

(7) Characteristics

(7-1)

In the embodiment described above, the weighed target weight setting unit 66 sets the individual weighed target weight Wt for each type of the material on the basis of the apparent specific gravity and the mix volume proportion Pv, and the control unit 60 controls the conveying unit 10 and the mix weighing unit 20 on the basis of the set individual weighed target weight Wt. The plurality of types of the material are thereby mixed at the mix volume proportion Pv after mix weighing, irrespective of whether the apparent specific gravity of the supplied material changes. This results in facilitation of a constant mixing ratio, in terms of external appearance, of the plurality of types of the material after mix weighing.

(7-2)

In the embodiment described above, the weighed target weight setting unit 66 individually sets the individual weighed target weight Wt for each type of the material on the basis of the total target weight stored in the storage unit 61. Specifically, the individual weighed target weight Wt are suitably set such that the total weight of the material after mix weighing conforms to or approximates the total target weight. As a result, the total weight after mix weighing is stabilized.

(7-3)

In the embodiment described above, the apparent specific gravity measurement unit 50 for measuring the apparent specific gravity of each type of the material is disposed upstream from the mix weighing unit 20. This facilitates measurement of the apparent specific gravity of the supplied material in real time during operation. As a result, the individual weighed target weight Wt can be quickly changed in response to fluctuations in the apparent specific gravity of the supplied material.

(7-4)

In the embodiment described above, when the apparent specific gravity stored in the storage unit 61 is updated during operation, the individual weighed target weight Wt are newly set by the weighed target weight setting unit 66 on the basis of the updated apparent specific gravity. Specifically, the individual weighed target weight Wt are set in real time on the basis of the updated apparent specific gravity during operation. This results in highly precise facilitation of a constant mixing ratio, in terms of external appearance, of the plurality types of the material after mix weighing even when variation in the apparent specific gravity of the supplied material is notable.

(7-5)

In the embodiment described above, it is only when the apparent specific gravity of a specific type of the material designated as a specific material is updated that the individual weighed target weight Wt are newly set on the basis of the updated apparent specific gravity. Specifically, the individual weighed target weight Wt is newly set exclusively for a prescribed material of which the apparent specific gravity readily fluctuates. As a result, the individual weighed target weight Wt is efficiently changed within a required minimum range. Specifically, it is configured such that updating of the individual weighed target weight Wt relating to a material of which the apparent specific gravity does not readily fluctuate can be omitted. Accordingly, processing speed is increased.

(8) Modifications

(8-1) Modification A

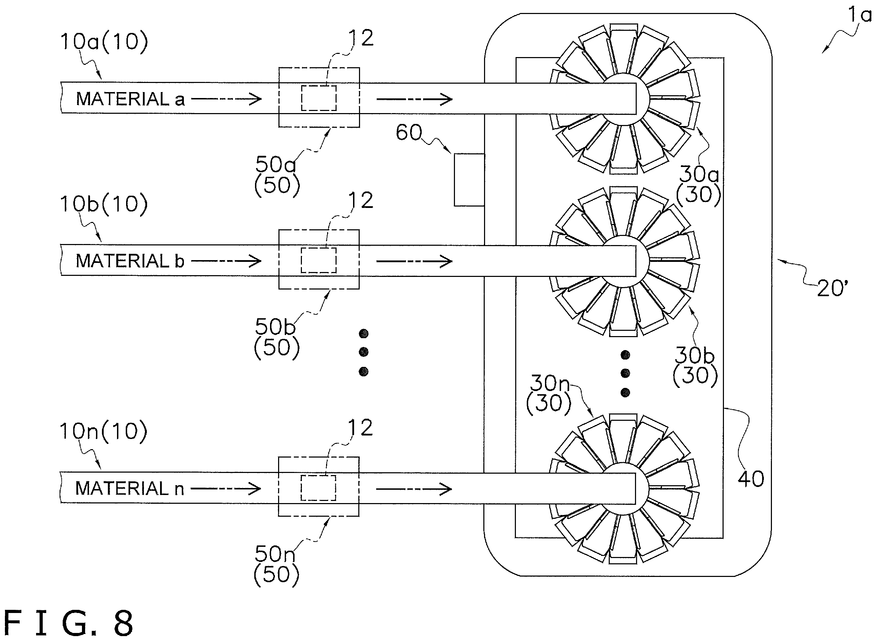

The mix weighing device 1 indicated in the embodiment described above may be configured in the manner of a mix weighing device 1a as shown in FIG. 8. FIG. 8 shows a mix weighing device 1a based on the premise of performing mix weighing of three or more types of materials (a, b, ... n). The mix weighing device 1a has n number of conveying lines (10a, 10b, ... 10n), a mix weighing unit 20a that has n number of weighing machines 30 (30a, 30b, ... 30n), and n number of apparent specific gravity measurement units (50a, 50b, ... 50n).

In such a mix weighing device 1a, a weighed target weight setting unit 66 calculates each of an individual weighed target weight Wta for a material a, an individual weighed target weight Wtb for a material b, and an individual weighed target weigh Wtn for a material n by a weighed target weight setting process such as is described below.

Specifically, in the weighed target weight setting process, the weighed target weight setting unit 66 acquires a mix volume proportion Pv' from a volume proportion storage region 612, acquires the apparent specific gravity of each type of the material from an apparent specific gravity storage region 614, and acquires a total target weight from a total target weight storage region 616. The mix volume proportion Pv' is the proportion of the volumes of the material a, the material b, ... and the material n after mix weighing.

Next, the weighed target weight setting unit 66 calculates each of the individual target volumes Vt of each type of the material on the basis of the acquired each value. For example, when the mix volume proportion Pv' is set to 1:2:3, the proportion of an individual target volume Vta of the material a, an individual target volume Vtb of the material b, and an individual target volume Vtc of a material c is 1:2:3, and the individual target volume Vta of the material a and the individual target volume Vtb of the material b being as follows:

$$Vta = Vtb + Vtc/5$$

$$Vtb = Vta + Vtc/2$$

$$Vtc = Vta + Vtb$$

Vta: Individual target volume Vt (cc) of material a
Vtb: Individual target volume Vt (cc) of material b
Vtc: Individual target volume Vt (cc) of material c

The weighed target weight setting unit 66 then calculates the individual weighed target weight Wt for each type of the material on the basis of the individual target volumes Vt, the apparent specific gravity of each type of the materials, and the total target weight.

For example, In a case where the total target weight is set to 100 (g), the apparent specific gravity Ga of the material a is calculated as 0.1 (g/cc), the apparent specific gravity Gb of the material b is calculated as 0.2 (g/cc), and the apparent specific gravity Gc of the material c is calculated as 0.15 (g/cc), the individual target volumes Vt of each type of the material is calculated, and the individual weighed target weight Wta, the individual weighed target weight Wtb, and the individual weighed target weight Wtc are calculated as follows:

$$Vta = 100 \times 1/(0.1 \times 1 + 0.2 \times 2 + 0.15 \times 3) = 105.26 \approx 105 \ (cc)$$

$$Vtb = 100 \times 2/(0.1 \times 1 + 0.2 \times 2 + 0.15 \times 3) = 210.52 \approx 211 \ (cc)$$

$$Vtc = 100 \times 3/(0.1 \times 1 + 0.2 \times 2 + 0.15 \times 3) = 315.78 \approx 316 \ (cc)$$

$$Wta = 0.1 \times 105 = 10.5 \approx 11 \ (g)$$

$$Wtb = 0.2 \times 211 = 42.2 \approx 42 \ (g)$$

$$Wtc = 0.15 \times 316 = 47.4 \approx 47 \ (g)$$

In such a state, when the apparent specific gravity Gb of the material b designated as a specific material fluctuates to 0.15 (g/cc), the individual target volume Vta, the individual target volume Vtb, the individual target volume Vtc, the individual weighed target weight Wta, the individual weighed target weight Wtb, and the individual weighed target weight Wtc are calculated as follows:

$$Vta = 100 \times 1/(0.1 \times 1 + 0.15 \times 2 + 0.15 \times 3) = 117.64 \approx 118 \ (cc)$$

$$Vtb = 100 \times 2/(0.1 \times 1 + 0.15 \times 2 + 0.15 \times 3) = 235.29 \approx 235 \ (cc)$$

$$Vtc = 100 \times 3/(0.1 \times 1 + 0.15 \times 2 + 0.15 \times 3) = 352.94 \approx 353 \ (cc)$$

$$Wta = 0.1 \times 118 = 11.8 \approx 12 \ (g)$$

$$\text{Wtb} = 0.15 \times 235 = 35.25 \approx 35 \text{ (g)}$$

$$\text{Wtc} = 0.15 \times 353 = 52.95 \approx 53 \text{ (g)}$$

In a case where all of the materials a, b, and c are designated as specific materials, when the apparent specific gravity Ga of the material a fluctuates to 0.2 (g/cc), the apparent specific gravity Gb of the material b fluctuates to 0.3 (g/cc), and the apparent specific gravity Gc of the material c fluctuates to 0.1 (g/cc), the individual target volume Vta, the individual target volume Vtb, the individual target volume Vtc, the individual weighed target weight Wta, the individual weighed target weight Wtb, and the individual weighed target weight Wtc are calculated as follows:

$$\text{Vta} = 100 \times 1/(0.2 \times 1 + 0.3 \times 2 + 0.1 \times 3) = 90.9 \approx 91 \text{ (cc)}$$

$$\text{Vtb} = 100 \times 2/(0.2 \times 1 + 0.3 \times 2 + 0.1 \times 3) = 181.81 \approx 182 \text{ (cc)}$$

$$\text{Vtc} = 100 \times 3/(0.2 \times 1 + 0.3 \times 2 + 0.1 \times 3) = 272.72 \approx 273 \text{ (cc)}$$

$$\text{Wta} = 0.2 \times 91 = 18.2 \approx 18 \text{ (g)}$$

$$\text{Wtb} = 0.3 \times 182 = 54.6 \approx 55 \text{ (g)}$$

$$\text{Wtc} = 0.1 \times 273 = 27.3 \approx 27 \text{ (g)}$$

Thus, in the mix weighing device 1a, three or more types of materials are supplied, and individual weighed target weight Wt for each type of the materials are calculated on the basis of the apparent specific gravity of each type of the materials, the mix volume proportion Pv', and the total target weight. Each type of the materials is thereby mixed at the mix volume proportion Pv' even when the three or more types of the materials need to be mix-weighed. This results in facilitation of a constant mixing ratio, in terms of external appearance, of the three or more types of the materials after mix weighing.

The mix weighing device 1a can also have applied thereto the concepts set forth in the modifications described later.

(8-2) Modification B

In the embodiment described above, the weighed target weight setting unit 66 calculated each of the individual weighed target weight Wt for each type of the materials on the basis of the total target weight (g), the apparent specific gravity of each of the materials, and the mix volume proportion Pv in the weighed target weight setting process. However, modifications may instead be made such that the weighed target weight setting unit 66 calculates each of the individual weighed target weight Wt for each type of the materials on the basis of the total target volume (cc), the apparent specific gravity of each type of the materials, and the mix volume proportion Pv. In such a case, a configuration may be adopted such that the storage unit 61 is provided with a total target volume storage region in lieu of the total target weight storage region 616, a total target volume set by a user being stored in this storage region. Moreover, a configuration may be adopted such that the weighed target weight setting unit 66 performs the weighed target weight setting process in the manner described below.

Specifically, the weighed target weight setting unit 66 first acquires the mix volume proportion Pv from the volume proportion storage region 612, acquires the apparent specific gravity of each type of the materials from the apparent specific gravity storage region 614, and acquires the total target volume from the total target volume storage region.

Next, the weighed target weight setting unit 66 calculates each of the individual target volumes Vt for each type of the materials on the basis of the acquired values.

For example, when the mix volume proportion Pv is set to 1:2, the proportion of a first target volume Vt1 of the food product A and a second target volume Vt2 of the food product B is 1:2, and the first target volume Vt1 of the food product A and the second target volume Vt2 of the food product B being as follows:

$$Vt2 = 2 \times Vt1$$

Vt1: Individual target volume Vt (cc) of food product A
Vt2: Individual target volume Vt (cc) of food product B

The weighed target weight setting unit 66 then calculates individual weighed target weight Wt for each type of the materials on the basis of the individual target volumes Vt, the apparent specific gravity of each type of the materials, and the total target volume.

For example, when the total target volume is set to 600 (cc) and the mix volume proportion Pv of the food product A and the food product B is set to 1:2, the first target volume Vt1 and the second target volume Vt2 are calculated as follows:

$$Vt1 = 600/(1 + 2) \times 1 = 200 \ (cc)$$

$$Vt2 = 600/(1 + 2) \times 2 = 400 \ (cc)$$

The first weighed target weight Wt1 and the second weighed target weight Wt2 are then calculated as follows, where the apparent specific gravity G1 of the food product A is calculated as 0.1 (g/cc), and the apparent specific gravity G2 of the food product B is calculated as 0.2 (g/cc):

$$Wt1 = 0.1 \times 200 = 20 \ (g)$$

$$Wt2 = 0.2 \times 400 = 80 \ (g)$$

In such a state, when the apparent specific gravity G2 of the food product B fluctuates to 0.15 (g/cc), the first weighed target weight Wt1 and the second weighed target weight Wt2 are calculated as follows:

$$Wt1 = 0.1 \times 200 = 20 \ (g)$$

$$Wt2 = 0.15 \times 400 = 60 \ (g)$$

In a case where the food product A is designated as a specific material, when the apparent specific gravity G1 of the food product A fluctuates to 0.12 (g/cc) and the apparent specific gravity G2 of the food product B fluctuates to 0.25 (g/cc), the first weighed target weight Wt1 and the second weighed target weight Wt2 are calculated as follows:

$$Wt1 = 0.12 \times 200 = 24 \ (g)$$

$$Wt2 = 0.25 \times 400 = 100 \ (g)$$

Thus, in the present modification, the weighed target weight setting unit 66 calculates each of the individual target volumes Vt for each type of the materials on the basis of the total target volume and the mix volume proportion Pv in the weighed target weight setting process, and calculates each of the individual weighed target weight Wt for each type of the materials on the basis of the calculated individual target volumes Vt and the apparent specific gravity of each type of the materials. That is, it can also be said that the individual weighed target weight Wt are calculated on the basis of the total target volume, the apparent specific gravity of each type of the materials, and the mix volume proportion Pv. Specifically, the weighed target weight setting unit 66 sets the individual weighed target weight Wt for each type of the materials on the basis of the total target volume such that the total volume of the materials after mix weighing conforms to or approximates the total target volume. As a result, the total volume after mix weighing is stabilized.

(8-3) Modification C

In the embodiment described above, the weighed target weight setting unit 66 calculated each of the individual weighed target weight Wt for each type of the materials on the basis of the total target weight (g), the apparent specific gravity of each type of the materials, and the mix volume proportion Pv in the weighed target weight setting process. However, modifications may instead be made such that the weighed target weight setting unit 66 calculates each of the individual weighed target weight Wt for each type of the materials on the basis of only the individual volume (cc) and apparent specific gravity of each type of the materials. Specifically, when the total target weight after mix weighing is not particularly important, the individual weighed target weight Wt may be calculated without any consideration for the total target weight.

In such a case, a configuration may be adopted such that the storage unit 61 is provided with an individual volume storage region in lieu of the total target weight storage region 616, and a inidividual volume for each type of the materials as set by a user is stored in this storage region. The volume proportion storage region 612 can also be omitted. Moreover, a configuration may be adopted such that the weighed target weight setting unit 66 performs the weighed target weight setting process in the manner described below.

Specifically, the weighed target weight setting unit 66 acquires the apparent specific gravity of each type of the materials from the apparent specific gravity storage region 614, and acquires the individual volumes from the individual volume storage region.

Next, the weighed target weight setting unit 66 calculates the individual weighed target weight Wt (first weighed target weight Wt1 and second weighed target weight Wt2) for each type of the materials on the basis of the acquired values in the manner described below.

For example, while the individual volume V1 of the food product A is set to 200 (cc) and the individual volume V2 of the food product B is set to 400 (cc), when the apparent specific gravity G1 of the food product A is calculated as 0.1 (g/cc) and the apparent specific gravity G2 of the food product B is calculated as 0.2 (g/cc), the first weighed target weight Wt1 and the second weighed target weight Wt2 are calculated as follows,.

$$Wt1 = G1 \times V1 = 0.1 \times 200 = 20 \ (g)$$

$$Wt2 = G2 \times V2 = 0.2 \times 400 = 80 \ (g)$$

In such a state, when the apparent specific gravity G2 of the food product B fluctuates to 0.15 (g/cc), the first weighed target weight Wt1 and the second weighed target weight Wt2 are calculated as follows:

$$Wt1 = 0.1 \times 200 = 20 \ (g)$$

$$Wt2 = 0.15 \times 400 = 60 \ (g)$$

In a case where the food product A is designated as a specific material, when the apparent specific gravity G1 of the food product A fluctuates to 0.12 (g/cc) and the apparent specific gravity G2 of the food product B fluctuates to 0.25 (g/cc), the first weighed target weight Wt1 and the second weighed target weight Wt2 are calculated as follows:

$$Wt1 = 0.12 \times 200 = 24 \ (g)$$

$$Wt2 = 0.25 \times 400 = 100 \ (g)$$

Thus, in the present modification, the weighed target weight setting unit 66 calculates each of the individual weighed target weight Wt for each type of the materials on the basis of the apparent specific gravity and individual volume of each type of the materials in the weighed target weight setting process. The individual volume of each type of the materials after mix weighing is thereby stabilized. As a result, the mix volume proportion after mix weighing is stabilized.

(8-4) Modification D

In the embodiment described above, the apparent specific gravity (G1 and G2) of the material was calculated on the basis of the mathematical formulas Fa and Fb. However, the mathematical formulas for calculating the apparent specific gravity are not necessarily limited to these, but rather can be modified, as appropriate.

Additionally, in the embodiment described above, the apparent specific gravity of each type of the materials was calculated on the basis of a measured value from the apparent specific gravity measurement unit 50. However, the measured value from the apparent specific gravity measurement unit 50 does not necessarily need to be considered in the calculation of the apparent specific gravity. For example, a configuration may be adopted such that the weight of the material from before the material is supplied to the conveying line is measured, and the apparent specific gravity of each type of the materials is calculated on the basis of such a measured value. In such a case, the apparent specific gravity measurement unit 50 can be omitted.

Additionally, the apparent specific gravity of the material does not necessarily need to be calculated by the control unit 60; rather, a modification may be made so that the calculated apparent specific gravity is stored in the storage unit 61. In such a case, the apparent specific gravity measurement unit 50 can be omitted.

(8-5) Modification E

In the embodiment described above, an example was given of a case where the food product to be mix-weighed by the mix weighing device 1 was popcorn. However, the mix weighing device 1 is not limited to popcorn, but rather is capable of mix-weighing meats, snacks, rice products, dry mixtures, legumes, and any other food products.

Additionally, the material to be mix-weighed is not necessarily limited to food products. The mix weighing device 1 is capable of mix-weighing pharmaceuticals and other chemical products, industrial products, electronic components, metal components, and any other such products.

(8-6) Modification F

In the embodiment described above, a number (i.e., two) of conveying lines equal to the number of types of supplied material were included in the conveying unit 10. However, the number of conveying lines included in the conveying unit 10 does not necessarily need to be equal to the number of types of the materials, but rather may be greater than the number of types of the materials (i.e., there may be three or more conveying lines). Alternatively, the number of conveying lines included in the conveying unit 10 may be less than the number of types of the materials (i.e., there may be one conveying line). In such a case, a configuration may be adopted such that the type of the materials supplied to the conveying lines is switched at each prescribed time period.

(8-7) Modification G

In the embodiment described above, a number (i.e., two) of weighing machines 30 equal to the number of types of supplied material were included in the mix weighing unit 20. However, the number of weighing machines 30 included in the mix weighing unit 20 does not necessarily need to be equal to the number of types of the materials, but rather may be greater than the number of types of the materials (i.e., there may be three or more weighing machines 30). Alternatively, the number of weighing machines 30 included in the mix weighing unit 20 may be less than the number of types of the materials (i.e., there may be one weighing machine 30). In such a case, a configuration may be adopted such that the type of the materials supplied to the weighing machines 30 is switched at each prescribed time period.

(8-8) Modification H

In the embodiment described above, a rotation unit 12 was provided to each of the conveying lines of the conveying unit 10. However, the rotation unit 12 is not necessarily needed, but rather can be omitted, as appropriate. In such a case, a modification may be made such that, e.g., a user suitably extracts the material supplied to the conveying line and sends the material to a prescribed apparent specific gravity measurement unit 50.

Alternatively, a modification may be made such that the apparent specific gravity measurement unit 50 is omitted, and a user measures the weight of the extracted material and suitably inputs the measured value to the control unit 60. Specifically, a user may perform the processes that would otherwise be performed by the apparent specific gravity measurement unit 50.

(8-9) Modification I

In the embodiment described above, only a given material (food product B) from among the plurality of the materials to be mix-weighed is designated as a specific material, and the apparent specific gravity (G2) of only the given material is suitably updated. However, the present invention is not limited to this configuration; rather, a modification may be made such that all (types) of the materials to be mix-weighed are designated as specific materials, or such that the specific material distinction flags F3 are omitted and the apparent specific gravity of all of the materials is suitably updated. In such a case, each of the individual weighed target weight Wt is suitably adjusted according to fluctuations in the apparent specific gravity of each type of the materials. Specifically, each of the individual weighed target weight Wt is calculated in consideration of even a minute fluctuation in the apparent specific gravity of a material of which the apparent specific gravity does not readily fluctuate. Therefore, highly precise facilitation of a constant mixing ratio, in terms of external appearance, of the material after mix weighing is realized.

(8-10) Modification J

In the embodiment described above, the control unit 60 was disposed in the mix weighing unit 20. However, the disposition of the control unit 60 is not limited to this configuration, but rather can be modified, as appropriate. For example, all or part of the control unit 60 may be disposed in the conveying unit 10 and/or the apparent specific gravity measurement unit 50. Alternatively, a configuration may be adopted such that all or part of the control unit 60 is disposed in a remote location, transmission/reception being made possible via a LAN and/or WAN or other network.

(8-11) Modification K

In the embodiment described above, the prescribed time periods t1 and t2 were set to 30 seconds. However, the prescribed time periods t1 and t2 can be suitably changed, according to the situation, and may be set to less than 30 seconds or to at least 31 seconds. For example, the prescribed time periods t1 and t2 may be set to 15 seconds, or to one minute. The prescribed time periods t1 and t2 do not necessarily need to be set to the same value, but rather may be set to different values.

(8-12) Modification L

In the embodiment described above, a configuration was adopted such that two types of the materials were mix-weighed. However, the number of types of materials to be mix-weighed is not necessarily limited to two, but rather may be three or more. In such a case, the number of conveying lines and weighing machines 30 may be suitably adjusted, and modifications may be suitably made to the content of the control by the control unit 60, so as to enable mix-weighing that corresponds to the number of types of materials.

(8-13) Modification M

In the embodiment described above, the first threshold value ΔTh1 is set to 800 cc. However, the first threshold value ΔTh1 may be set to less than 800 cc or to at least over 801 cc according to the supplied material and/or design specifications.

(8-14) Modification N

In the embodiment described above, the weighing machines 30 included in the mix weighing unit 20 were combination weighing machines, but the weighing machines 30 are not limited to this configuration. The weighing machines 30 may be, e.g., automatic weighing machines for automatically weighing and discharging the material of the individual weighed target weight Wt.

(8-15) Modification O

In the embodiment described above, each of the individual weighed target weight Wt for each type of the materials was calculated on the basis of the apparent specific gravity and the mix volume proportion Pv, or on the basis of the individual volumes (cc) and apparent specific gravity of each type of the materials. However, the present invention is not necessarily limited to this configuration, but rather may be configured so as to be capable of switching between these options.

## INDUSTRIAL APPLICABILITY

The present invention can be applied to a mix-weighing device.

## REFERENCE SIGNS LIST

1, 1a: Mix weighing device
10: Conveying unit
10a: First conveying line
10b: Second conveying line
11: Drive unit
12: Rotation unit
20, 20a: Mix weighing unit
30: Weighing machine
30a: First weighing machine
30b: Second weighing machine
31: Dispersion unit
32: Emission unit
33: Pool hopper
34: Weighing hopper
35: Gathering chute
40: Integration chute
45: Timing hopper
50: Apparent specific gravity measurement unit
50a: First specific gravity measurement unit
50b: Second specific gravity measurement unit
51: Specific gravity measurement hopper
52: Photoelectric Sensor
60: Control unit
61: Storage unit
62: Input/output unit
63: Conveying unit control unit
64: Apparent specific gravity calculation unit
65: Mix weighing unit control unit
66: Weighed target weight setting unit (setting unit)

## CITATION LIST

## PATENT LITERATURE

Patent Literature 1: Japanese Laid-open Patent Publication No. H 9-133573

## Claims

1. A mix weighing device to mix-weigh a plurality of types of materials on the basis of individual weighed target weight, the mix weighing device comprising:

   a conveying unit configured and arranged to convey the material;
   a weighing unit configured and arranged to weigh and discharge the material conveyed by the conveying unit;
   a storage unit configured and arranged to store an apparent specific gravity of each type of the material, and a mix volume proportion of each type of the materials in the mix weighing;
   a setting unit configured and arranged to set the individual weighed target weight for each type of the material on the basis of the apparent specific gravity and the mix volume proportion; and
   a control unit configured and arranged to control the conveying unit and the weighing unit on the basis of the individual weighed target weight set by the setting unit.

2. The mix weighing device according to claim 1, wherein:

   the storage unit further stores a post-mix-weighing total target weight; and
   the setting unit sets the individual weighed target weight by type of the material further on the basis of the total target weight.

3. The mix weighing device according to claim 1 or 2, wherein:

   the mix weighing device further comprises an apparent specific gravity measurement unit disposed upstream from the weighing unit, and the apparent specific gravity measurement unit configured and arranged to measure the apparent specific gravity of each type of the materials.

4. The mix weighing device according to any one of claims 1 to 3, wherein:

   the setting unit configured and arranged to set newly the individual weighed target weight on the basis of the updated apparent specific gravity when the apparent specific gravity stored in the storage unit is updated during operation,.

5. The mix weighing device according to claim 4, wherein:

   the setting unit configured and arranged to set newly the individual weighed target weight on the basis of the updated apparent specific gravity only when the apparent specific gravity of a specific type of the material is updated.

FIG. 1

F I G. 2

TO PACKAGING MACHINE

FOOD PRODUCT

TO MIX WEIGHING UNIT 20

10

12

50

51

52

52

FIG. 3

F I G. 4

START

S101 HAS TOTAL TARGET WEIGHT BEEN INPUTTED?  NO

YES

S102 CONTROL DRIVING OF EACH CONVEYING LINE

S103 ISSUE MEASUREMENT START COMMAND TO EACH APPARENT SPECIFIC GRAVITY MEASUREMENT UNIT

S104 OUTPUT FROM APPARENT SPECIFIC GRAVITY MEASUREMENT UNIT?  NO

YES

S105 CALCULATE APPARENT SPECIFIC GRAVITY OF EACH MATERIAL (SUITABLY UPDATE APPARENT SPECIFIC GRAVITY OF SPECIFIC MATERIALS)

S106 CALCULATE INDIVIDUAL WEIGHED TARGET WEIGHTS FOR EACH MATERIAL ON BASIS OF APPARENT SPECIFIC GRAVITY OF MATERIAL, MIX VOLUME PROPORTION, AND TOTAL TARGET WEIGHT

S107 CONTROL DRIVING OF WEIGHING MACHINES ON BASIS OF INDIVIDUAL WEIGHED TARGET WEIGHTS Wt

S108 CONTROL DRIVING OF TIMING HOPPER

F I G. 5

F I G. 6

45

A1

B1

# F I G. 7

F I G. 8

## INTERNATIONAL SEARCH REPORT

| International application No. |
| --- |
| PCT/JP2016/056863 |

| A. CLASSIFICATION OF SUBJECT MATTER |
| --- |
| *G01G19/387*(2006.01)i, *G01G13/04*(2006.01)i |

According to International Patent Classification (IPC) or to both national classification and IPC

| B. FIELDS SEARCHED |
| --- |

Minimum documentation searched (classification system followed by classification symbols)
G01G19/387, G01G19/393, G01G13/04, G01F11/00, B01F15/04

Documentation searched other than minimum documentation to the extent that such documents are included in the fields searched

| Jitsuyo Shinan Koho | 1922-1996 | Jitsuyo Shinan Toroku Koho | 1996-2016 |
| --- | --- | --- | --- |
| Kokai Jitsuyo Shinan Koho | 1971-2016 | Toroku Jitsuyo Shinan Koho | 1994-2016 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 5-079890 A  (Anritsu Corp.), 30 March 1993 (30.03.1993), paragraphs [0001], [0004] to [0005], [0008], [0015] to [0022]; fig. 1, 4 (Family: none) | 1-5 |
| A | JP 62-259018 A  (Yamato Scale Co., Ltd.), 11 November 1987 (11.11.1987), page 1, lower right column, line 12 to page 3, upper left column, line 1; fig. 2 & US 4766964 A specification, column 1, line 5 to column 2, line 5; column 2, line 47 to column 3, line 13; fig. 1 & GB 2190206 A        & GB 8708380 A0 & DE 3714551 A1        & FR 2598222 A1 | 1-5 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 May 2016 (20.05.16) | 31 May 2016 (31.05.16) |

| Name and mailing address of the ISA/ Japan Patent Office 3-4-3,Kasumigaseki,Chiyoda-ku, Tokyo 100-8915,Japan | Authorized officer   Telephone No. |
| --- | --- |

Form PCT/ISA/210 (second sheet) (January 2015)

**INTERNATIONAL SEARCH REPORT**

| International application No. |
| --- |
| PCT/JP2016/056863 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2001-324376 A  (Anritsu Corp.), 22 November 2001 (22.11.2001), paragraphs [0001] to [0007], [0018] to [0022]; fig. 1 (Family: none) | 1-5 |
| A | JP 2-187141 A  (Kawasaki Steel Corp.), 23 July 1990 (23.07.1990), entire text; all drawings (Family: none) | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9133573 B